# EUROPEAN PATENT APPLICATION

(11) **EP 4 804 479 A1**
(43) Date of publication of application: **09.09.2026**
(21) Application number: 26162709.5
(22) Date of filing: 05.03.2026
(51) Int. Cl.: H04L 45/02, H04L 45/125, H04L 45/44

(54) **PROVIDING HIERARCHICAL TRAFFIC ENGINEERING FOR A NETWORK**

(30) Priority: 06.03.2025 US 202519072364
(71) Applicant: Hewlett Packard Enterprise Development LP, Spring, TX 77389 (US)
(72) Inventor: BARTH, Jonathan C., Sunnyvale, 94089 (US); LI, Anthony Joseph, Sunnyvale, 94089 (US)
(74) Representative: Marks & Clerk LLP

(57) **Abstract**

An ingress network device may calculate entry paths from across an entry network of a network, wherein the network includes a transit network with a plurality of transit network devices and a destination network with a plurality of destination network devices. The ingress network device may store the entry paths locally in the ingress network device, and may receive traffic destined for a destination. The ingress network device may retrieve, from a distributed data structure, transit paths associated with the transit network and destination paths associated with the destination network, and may determine a path for the traffic based on the entry paths, the transit paths, and the destination paths. The ingress network device may provide the traffic to the destination via the path.

## Description

### BACKGROUND

Traffic engineering is the process of managing network traffic to improve performance and reduce congestion in a network. Traffic engineering may include optimizing traffic flow, allocating resources, and selecting routing paths.

### SUMMARY

Particular aspects are set out in the appended independent claims. Various optional embodiments are set out in the dependent claims. Some implementations described herein relate to a method. The method may include calculating entry paths from across an entry network of a network, wherein the network includes a transit network with a plurality of transit network devices and a destination network with a plurality of destination network devices. The method may include storing the entry paths locally in an ingress network device, and receiving traffic destined for a destination. The method may include retrieving, from a distributed data structure, transit paths associated with the transit network and destination paths associated with the destination network, and determining a path for the traffic based on the entry paths, the transit paths, and the destination paths. The method may include providing the traffic to the destination via the path.

Some implementations described herein relate to an ingress network device. The ingress network device may include one or more memories and one or more processors. The one or more processors may be configured to calculate entry paths from across an entry network of a network, wherein the network includes a transit network with a plurality of transit network devices and a destination network with a plurality of destination network devices. The one or more processors may be configured to store the entry paths locally in the ingress network device, and receive traffic destined for a destination. The one or more processors may be configured to retrieve, from a distributed data structure, transit paths associated with the transit network and destination paths associated with the destination network, wherein the distributed data structure is configured to store the transit paths, administrative policy properties of the transit paths, bandwidth utilization by the transit paths, the destination paths, administrative policy properties of the destination paths, and bandwidth utilization by the destination paths. The one or more processors may be configured to determine a path for the traffic based on the entry paths, the transit paths, and the destination paths, and provide the traffic to the destination via the path.

Some implementations described herein relate to a computer-readable medium that encodes a set of instructions. The set of instructions, when executed by one or more processors of an ingress network device, may cause the ingress network device to calculate entry paths from across an entry network of a network, wherein the network includes a transit network with a plurality of transit network devices and a destination network with a plurality of destination network devices. The set of instructions, when executed by one or more processors of the ingress network device, may cause the ingress network device to store the entry paths locally in the ingress network device, and receive traffic destined for a destination. The set of instructions, when executed by one or more processors of the ingress network device, may cause the ingress network device to retrieve, from a distributed data structure, transit paths associated with the transit network and destination paths associated with the destination network, and determine a path for the traffic based on the entry paths, the transit paths, and the destination paths. The set of instructions, when executed by one or more processors of the ingress network device, may cause the ingress network device to signal the path to one or more of the plurality of transit network devices and to one or more of the plurality of destination network devices, and provide the traffic to the destination via the path and based on signaling the path to the one or more of the plurality of transit network devices and to the one or more of the plurality of destination network devices.

### BRIEF DESCRIPTION OF THE DRAWINGS

Figs. 1A-1E are diagrams of an example associated with providing hierarchical traffic engineering for a network.
Fig. 2 is a diagram of an example environment in which systems and/or methods described herein may be implemented.
Figs. 3 and 4 are diagrams of example components of one or more devices of Fig. 2.
Fig. 5 is a flowchart of an example process for providing hierarchical traffic engineering for a network.

### DETAILED DESCRIPTION

The following detailed description of example implementations refers to the accompanying drawings. The same reference numbers in different drawings may identify the same or similar elements.

Traffic engineering has been addressed for small scale network traffic with the resource reservation protocol-traffic engineering (RSVP-TE) and segment routing with controllers. However, there has never been a satisfactory solution for large scale traffic engineering. Historically, link state protocols, such as the intermediate system to intermediate system (IS-IS) routing protocol and the open shortest path first (OSPF) routing protocol, have been used to carry topology and bandwidth reservation data necessary for traffic engineering. However, such routing protocols are limited to a single area with only a few thousand network devices. As networks have grown, they have exceeded capacities afforded by a single area and need traffic engineering at a higher scale and spanning multiple areas. The routing protocols are load insensitive and do not provide any mechanism for bandwidth management. Without some mechanism for allocating traffic to an available bandwidth, networks would have to be drastically over-provisioned, which is not economically sound.

There have been many different attempts to address this problem. For example, a brute force approach attempts to scale the size of an area (e.g., an interior gateway protocol (IGP) area). However, if the quantity of network devices in an area is increased, then some network devices will run out of resources, and significant degradation in convergence time is inevitable. A scale-up approach utilizes controllers, where a single controller may be a single point of failure, so a set of redundant controllers is necessary. However, the scale-up approach defies scalability since there needs to be a single controller that stores all of the data and performs all of the work. Another approach is to utilize a set of hierarchical controllers. Unfortunately, this has been found to be impractical. Still another approach is to distribute global information to head ends. However, this approach causes a scalability issue in that every head end must scale to hold an entire network database.

Thus, current techniques for performing traffic engineering in large scale networks consume computing resources (e.g., processing resources, memory resources, communication resources, and/or the like), networking resources, and/or the like that are associated with handling exhaustion of resources during performance of traffic engineering, providing a single point of failure controller that handles traffic engineering, utilizing impractical hierarchical controllers for traffic engineering, storing an entire network database in head ends that perform traffic engineering, and/or the like.

Some implementations described herein relate to providing hierarchical traffic engineering for a network. For example, an ingress network device may calculate entry paths from across an entry network of a network, wherein the network includes a transit network with a plurality of transit network devices and a destination network with a plurality of destination network devices. The ingress network device may store the entry paths locally in the ingress network device, and may receive traffic destined for a destination. The ingress network device may retrieve, from a distributed data structure, transit paths associated with the transit network and destination paths associated with the destination network, and may determine a path for the traffic based on the entry paths, the transit paths, and the destination paths. The ingress network device may provide the traffic to the destination via the path.

In this way, hierarchical traffic engineering is provided for a network. For example, instead of carrying topology and bandwidth reservation information in a routing protocol, such information may be stored in a distributed data structure (e.g., a database) accessible to network devices of a network. Some areas of the network (e.g., transit areas) may carry topology and bandwidth reservation information between other areas of the network. The transit areas may pre-provision multiprotocol label switching (MPLS) label switched paths (LSPs) from end-to-end across the area. These transit LSPs may be stored in the distributed data structure with the bandwidth reservation information and with information about a boundary of the area. Areas that contain an endpoint of traffic demand may be referred to as edge areas. A network device that is an ingress for a traffic flow may be referred to as an ingress network device (or head end) and may be responsible for end-to-end path computation. Area border network devices within an edge area may be responsible for computing egress LSPs to each egress in the area, and for storing the egress LSPs in the distributed data structure.

The ingress network device may perform a path computation by computing a path spanning an area of the ingress network device, selecting a transit LSP from one or more transit areas, and selecting an egress LSP, such that a concatenation of these LSPs creates an end-to-end path that complies with policy constraints and has adequate bandwidth. When the transit and egress LSPs are computed, the ingress network device may signal the transit and egress LSPs across their respective areas using RSVP. An MPLS label may be associated with each LSP and may be stored in the distributed data structure. End-to-end paths may be signaled using RSVP across the ingress area. Once signaling hits a transit or egress LSP, signaling can be done directly to an LSP endpoint network device and does not need to be repeated for intermediate network devices. In the data plane, transit LSPs may be treated as container LSPs and may push an additional label onto a label stack.

Thus, the network conserves computing resources, networking resources, and/or the like that would otherwise have been consumed by handling exhaustion of resources during performance of traffic engineering, providing a single point of failure controller that handles traffic engineering, utilizing impractical hierarchical controllers for traffic engineering, storing an entire network database in head ends that perform traffic engineering, and/or the like.

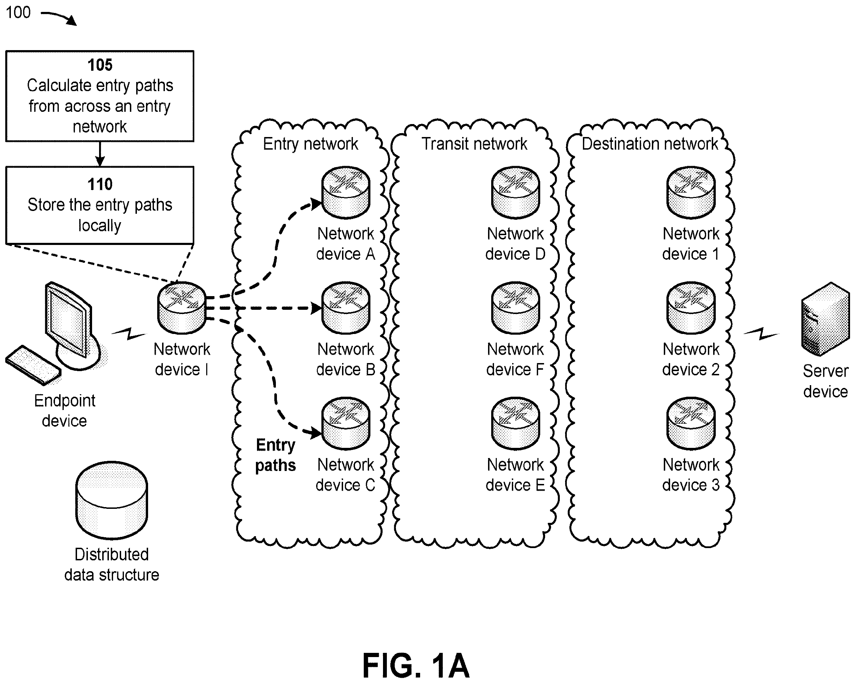

Figs. 1A-1E are diagrams of an example 100 associated with providing hierarchical traffic engineering for a network. As shown in Figs. 1A-1E, the example 100 includes an endpoint device associated with an entry network, a transit network, a destination network, a distributed data structure, and a server device. The entry network may include multiple network devices, such as an ingress network device (e.g., network device I), network device A, network device B, and network device C. The transit network may include multiple network devices, such as network device D, network device E, and network device F. The destination network may include multiple network devices, such as a first provider edge (PE) network device (e.g., network device 1), a second PE network device (e.g., network device 2), and a third PE network device (e.g., network device 3). Further details of the entry network, the transit network, the destination network, the endpoint device, the server device, the network, the distributed data structure, and the network devices are provided elsewhere herein. In some implementations, there may be more than one transit network and/or more than one destination network.

Implementations described herein provide an architecture that allows traffic engineering and bandwidth management in a scalable and consistent way over several network areas (or domains). The implementations may add a hierarchical approach to traffic engineering, may cause area network devices to compute partial paths for areas, and may combine the partial paths to form an end-to-end path through a network.

In order to prevent the network from reacting to load and becoming an oscillator, the implementations may incorporate low-frequency feedback so that the network is over-damped and slowly converges to a correct traffic engineering answer. In traffic engineering, this over-damping may be provided by updating link utilization advertisements at a low frequency. The implementations described herein may be applicable to both distributed path computation by head ends in each area, or by centralized entities, such as a path computation element (PCE) or a controller. The implementations may be independent of the forwarding plane and may be applied to RSVP-TE with MPLS, segment routing (SR), or segment routing version 6 (SRv6).

As shown in Fig. 1A, and by reference number 105, the ingress network device may calculate entry paths from across the entry network. For example, full traffic engineering information can be extensive. The full traffic engineering information may include a full network topology, along with a maximum bandwidth, a maximum reservable bandwidth, and unreserved bandwidth for each link of the network. The full traffic engineering information may also include administrative groups and additional metrics. The full traffic engineering information may be useful for path computation, and more information may be added to the full traffic engineering information in the future. However, from a scalability point of view, the full traffic engineering information need not be provided everywhere in the network. In some implementations, a portion of the full traffic engineering information may be calculated locally by a portion of the network (e.g., the entry network, the transit network, and the destination network), and may be provided to other portions of the network. A portion of the full traffic engineering information may include a partial path from an ingress of the portion of the network (e.g., an area or a domain) to an egress of the portion of the network. Like a link, a partial path may include administrative policy attributes and bandwidth attributes. The portion of the network may store partial paths for the portion of the network in the distributed data structure for use by other portions of the network. A partial path may be similar to an express segment, but may not be tied to segment routing and may include bandwidth management attributes, such as a remaining capacity.

In some implementations, a network device (e.g., the ingress network device I) at an ingress area for traffic (e.g., the entry network) may calculate entry paths across the entry network and to egress network devices of the entry network (e.g., network device A, network device B, and network device C). In some implementations, each of the egress network devices of the entry network may be an area border router (ABR). In one example, the entry paths may include a path from the ingress network device to network device A, a path from the ingress network device to network device B, and a path from the ingress network device to network device C.

As further shown in Fig. 1A, and by reference number 110, the ingress network device may store the entry paths locally in the ingress network device. Conceptually, the entry paths may be part of an overall path database. However, since the entry paths are only used locally in the entry network, there is no need to store the entry paths in the distributed data structure. In some implementations, the ingress network device may store the entry paths locally in the ingress network device, rather than in the distributed data structure.

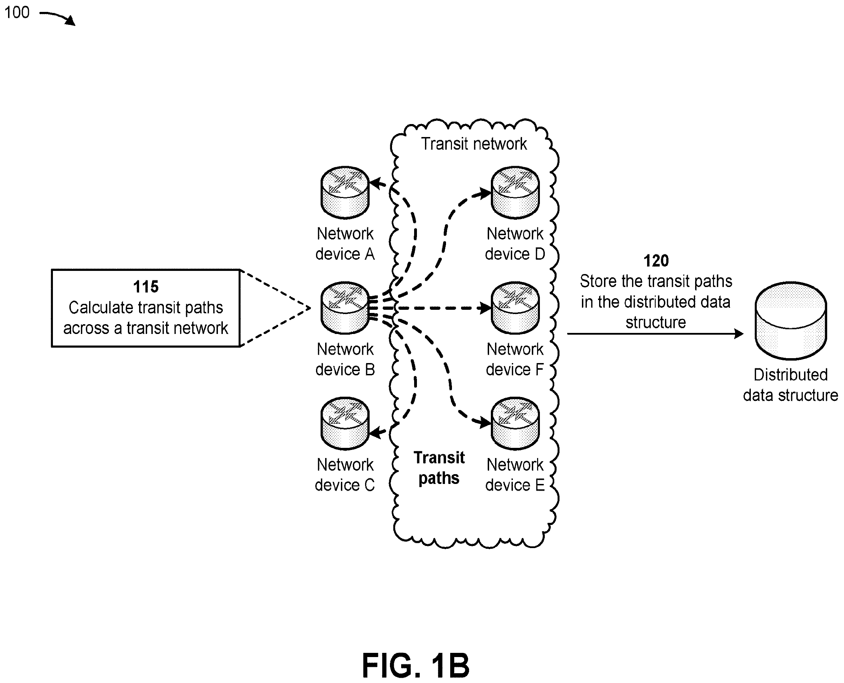

As shown in Fig. 1B, and by reference number 115, network device B may calculate transit paths across the transit network. For example, a network device (e.g., network device B) at an ingress area for the transit network may calculate transit paths across the transit network and to egress network devices of the transit network (e.g., network device D, network device E, and network device F). In some implementations, each of the egress network devices of the transit network may be an ABR. In one example, the transit paths may include a path from network device B to network device A, a path from network device B to network device C, a path from network device B to network device D, a path from network device B to network device E, and a path from network device B to network device F.

In some implementations, all ingress network devices of the transit network may calculate paths across the transit area, and may create a full mesh of paths between each ingress network device of the transit network to each egress network device of the transit network. In some implementations, redundancy may be required, and there may be multiple paths for each ingress and egress network device pair. Thus, a network device (e.g., network device A) at an ingress area for the transit network may calculate transit paths across the transit network and to egress network devices of the transit network (e.g., network device D, network device E, and network device F). In one example, the transit paths may include a path from network device A to network device B, a path from network device A to network device C, a path from network device A to network device D, a path from network device A to network device E, and a path from network device A to network device F. Alternatively, or additionally, a network device (e.g., network device C) at an ingress area for the transit network may calculate transit paths across the transit network and to egress network devices of the transit network (e.g., network device D, network device E, and network device F). In one example, the transit paths may include a path from network device C to network device A, a path from network device C to network device B, a path from network device C to network device D, a path from network device C to network device E, and a path from network device C to network device F.

As further shown in Fig. 1B, and by reference number 120, network device B may store the transit paths in the distributed data structure. For example, each of the ingress network devices of the transit network may store the calculated transit paths in the distributed data structure, along with administrative policy properties (e.g., administrative groups) of the transit paths, and bandwidth utilization of the transit paths. In some implementations, network device B may store, in the distributed data structure, the transit paths calculated by network device B, the administrative policy properties of the transit paths, and the bandwidth utilization of the transit paths. Alternatively, or additionally, network device A may store, in the distributed data structure, the transit paths calculated by network device A, the administrative policy properties of the transit paths, and the bandwidth utilization of the transit paths. Alternatively, or additionally, network device C may store, in the distributed data structure, the transit paths calculated by network device C, the administrative policy properties of the transit paths, and the bandwidth utilization of the transit paths.

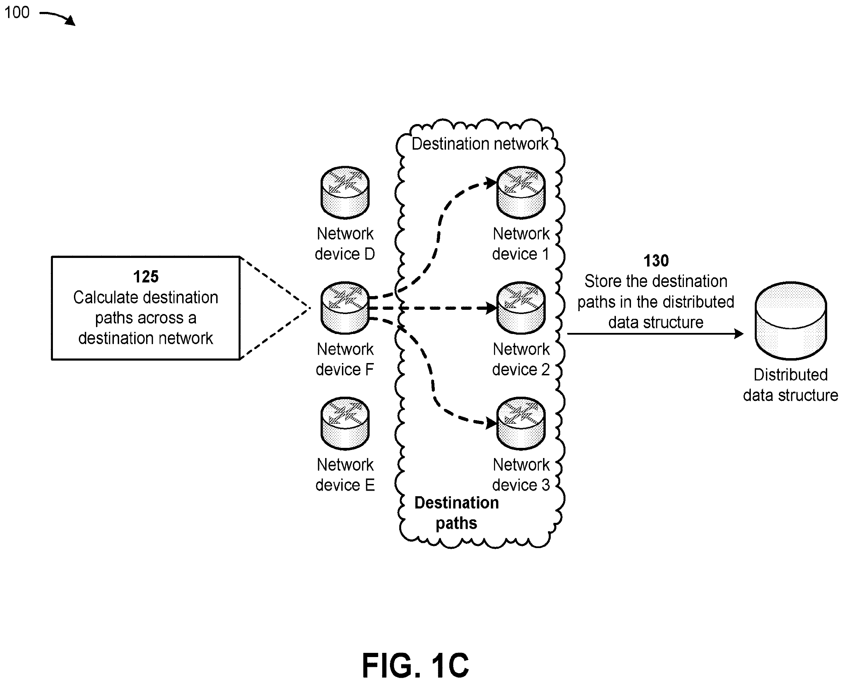

As shown in Fig. 1C, and by reference number 125, network device F may calculate destination paths across the destination network. For example, a network device (e.g., network device F) at an ingress area for the destination network may calculate destination paths across the destination network and to egress network devices of the destination network (e.g., network device 1, network device 2, and network device 3). In some implementations, each of the egress network devices of the destination network may be a provider edge router. In one example, the destination paths may include a path from network device F to network device 1, a path from network device F to network device 2, and a path from network device F to network device 3.

In some implementations, the other egress network devices (e.g., network device D and network device E) may each be associated with a different destination network than depicted in the Figures. Thus, a network device (e.g., network device D) at an ingress area for another destination network may calculate destination paths across the other destination network and to egress network devices of the other destination network. Alternatively, or additionally, a network device (e.g., network device E) at an ingress area for still another destination network may calculate destination paths across the still other destination network and to egress network devices of the still other destination network.

As further shown in Fig. 1C, and by reference number 130, network device F may store the destination paths in the distributed data structure. For example, each of the ingress network devices of the destination network may store the calculated destination paths in the distributed data structure, along with administrative policy properties (e.g., administrative groups) of the destination paths, and bandwidth utilization of the destination paths. In some implementations, network device F may store, in the distributed data structure, the destination paths calculated by network device F, the administrative policy properties of the destination paths, and the bandwidth utilization of the destination paths. Alternatively, or additionally, network device D may store, in the distributed data structure, the destination paths calculated by network device D, the administrative policy properties of the destination paths, and the bandwidth utilization of the destination paths. Alternatively, or additionally, network device E may store, in the distributed data structure, the destination paths calculated by network device E, the administrative policy properties of the destination paths, and the bandwidth utilization of the destination paths.

In some implementations, the distributed data structure may be separate from the network devices of the network, may not be coupled to the IGP, and may include other information for the management plane. The distributed data structure may provide efficiency and scalability by only propagating portions of the full traffic engineering information to only network devices with a need for the portions of the full traffic engineering information.

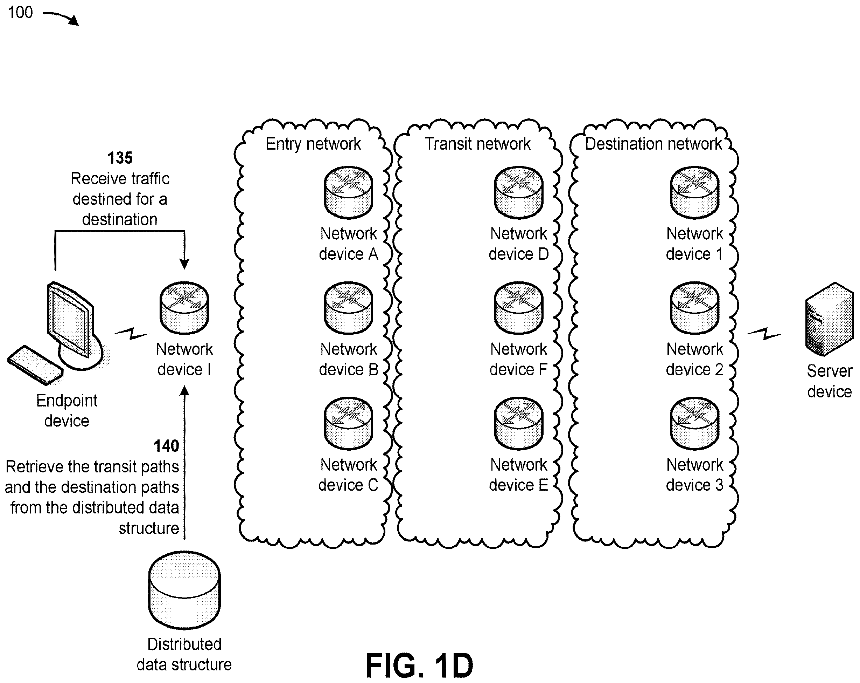

As shown in Fig. 1D, and by reference number 135, the ingress network device may receive traffic destined for a destination. For example, the ingress network device may receive traffic from the endpoint device. In some implementations, the traffic may be destined for a destination, such as the server device. Based on receiving the traffic, the ingress network device may calculate a path for the traffic through the entry network, through the transit network, through the destination network, and to the server device (e.g., the destination).

As further shown in Fig. 1D, and by reference number 140, the ingress network device may retrieve the transit paths and the destination paths from the distributed data structure. For example, in order to calculate the path for the traffic, the ingress network device may need to utilize one of the entry paths calculated by the ingress network device, one or more of the transit paths calculated for the transit network, and one of the destination paths calculated for the destination network. In some implementations, the ingress network device may retrieve the entry paths calculated by the ingress network device and locally stored in the ingress network device. The ingress network device may also provide, to the distributed data structure, a request for the transit paths calculated for the transit network and for the destination paths calculated for the destination network. The distributed data structure may receive the request, and may identify the transit paths and the destination paths (e.g., stored in the distributed data structure) based on the request. The distributed data structure may provide the transit paths and the destination paths to the ingress network device, and the ingress network device may receive the transit paths and the destination paths from the distributed data structure.

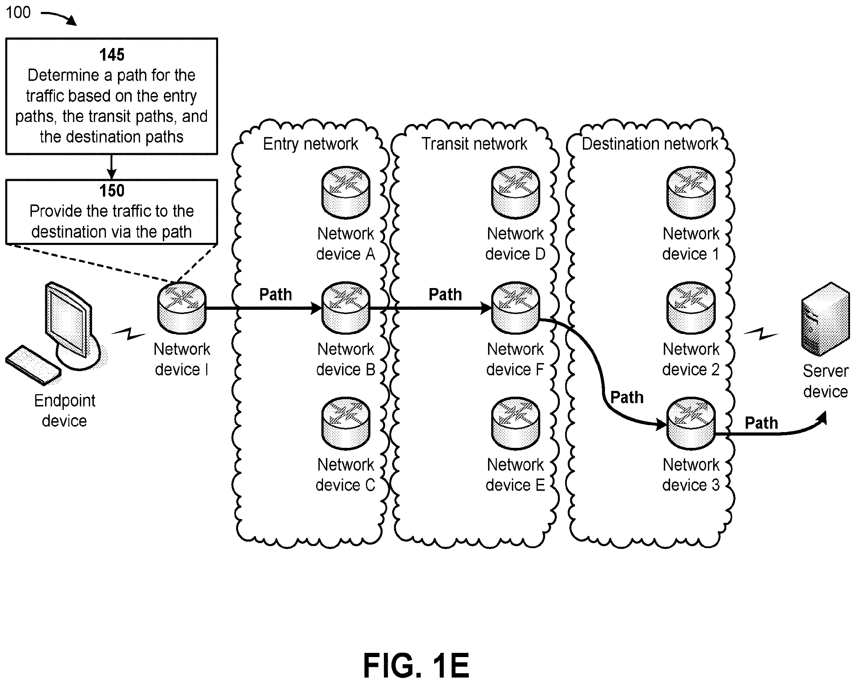

As shown in Fig. 1E, and by reference number 145, the ingress network device may determine a path for the traffic based on the entry paths, the transit paths, and the destination paths. For example, to determine the path for the traffic based on the entry paths, the transit paths, and the destination paths, the ingress network device may select one of the entry paths for the path, and may select one or more of the transit paths for the path. The ingress network device may also select one of the destination paths for the path, and may combine the one of the entry paths, the one or more of the transit paths, and the one of the destination paths to generate the path. In some implementations, the path may include an end-to-end path through the network (e.g., via the entry network, the transit network, and the destination network) for the traffic.

As further shown in Fig. 1E, and by reference number 150, the ingress network device may provide the traffic to the destination via the path. For example, the ingress network device may provide the traffic to the server device (e.g., the destination) via the path from the ingress network device to network device B, the path from network device B to network device F, the path from network device F to network device 3, and the path from network device 3 to the server device. In some implementations, prior to providing the traffic to the destination via the path, the ingress network device may signal the path to one or more of the entry network devices (e.g., to network device B), to one or more of the transit network devices (e.g., to network device F), and to one or more of the plurality of destination network devices (e.g., to network device 3). The ingress network device may provide the traffic to the one or more of the entry network devices (e.g., to network device B), to the one or more of the transit network devices (e.g., to network device F), then to the one or more of the destination network devices (e.g., network device 3), and finally to the destination (e.g., the server device).

In this way, hierarchical traffic engineering is provided for a network. For example, instead of carrying topology and bandwidth reservation information in a routing protocol, such information may be stored in a distributed data structure (e.g., a database) accessible to network devices of a network. Some areas of the network (e.g., transit areas) may carry topology and bandwidth reservation information between other areas of the network. The transit areas may pre-provision MPLS LSPs from end-to-end across the area. These transit LSPs may be stored in the distributed data structure with the bandwidth reservation information and with information about a boundary of the area. Areas that contain an endpoint of traffic demand may be referred to as edge areas. A network device that is an ingress for a traffic flow may be referred to as an ingress network device (or head end) and may be responsible for end-to-end path computation. Area border network devices within an edge area may be responsible for computing egress LSPs to each egress in the area, and for storing the egress LSPs in the distributed data structure.

The ingress network device may perform a path computation by computing a path spanning an area of the ingress network device, selecting a transit LSP from one or more transit areas, and selecting an egress LSP, such that a concatenation of these LSPs creates an end-to-end path that complies with policy constraints and has adequate bandwidth. When the transit and egress LSPs are computed, the ingress network device may signal the transit and egress LSPs across their respective areas using RSVP. An MPLS label may be associated with each LSP and may be stored in the distributed data structure. End-to-end paths may be signaled using RSVP across the ingress area. Once signaling hits a transit or egress LSP, signaling can be done directly to an LSP endpoint network device and does not need to be repeated for intermediate network devices. In the data plane, transit LSPs may be treated as container LSPs and may push an additional label onto a label stack.

Thus, the network conserves computing resources, networking resources, and/or the like that would otherwise have been consumed by handling exhaustion of resources during performance of traffic engineering, providing a single point of failure controller that handles traffic engineering, utilizing impractical hierarchical controllers for traffic engineering, storing an entire network database in head ends that perform traffic engineering, and/or the like.

As indicated above, Figs. 1A-1E are provided as an example. Other examples may differ from what is described with regard to Figs. 1A-1E. The number and arrangement of devices shown in Figs. 1A-1E are provided as an example. In practice, there may be additional devices, fewer devices, different devices, or differently arranged devices than those shown in Figs. 1A-1E. Furthermore, two or more devices shown in Figs. 1A-1E may be implemented within a single device, or a single device shown in Figs. 1A-1E may be implemented as multiple, distributed devices. Additionally, or alternatively, a set of devices (e.g., one or more devices) shown in Figs. 1A-1E may perform one or more functions described as being performed by another set of devices shown in Figs. 1A-1E.

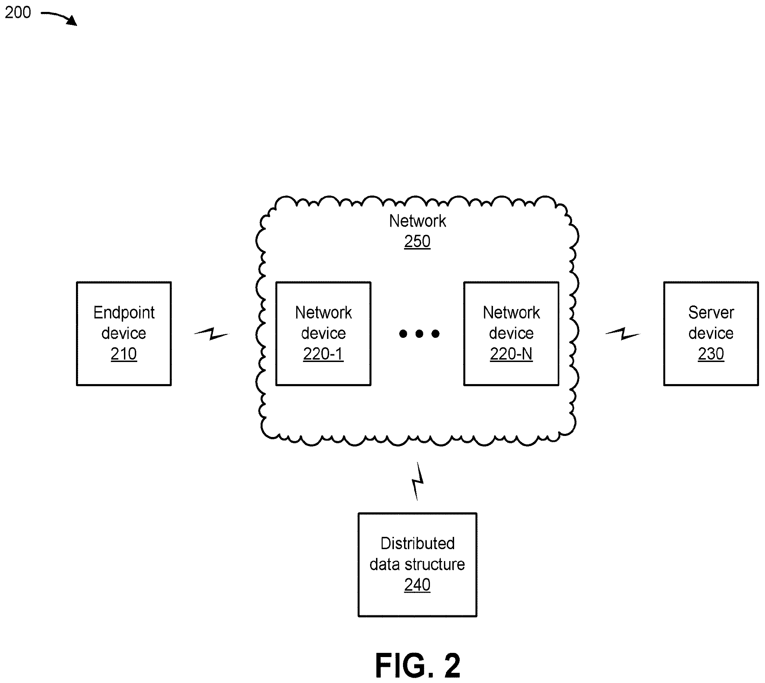

Fig. 2 is a diagram of an example environment 200 in which systems and/or methods described herein may be implemented. As shown in Fig. 2, environment 200 may include an endpoint device 210, a group of network devices 220 (shown as network device 220-1 through network device 220-N), a server device 230, a distributed data structure 240, and a network 250. Devices of the environment 200 may interconnect via wired connections, wireless connections, or a combination of wired and wireless connections.

The endpoint device 210 includes one or more devices capable of receiving, generating, storing, processing, and/or providing information, such as information described herein. For example, the endpoint device 210 may include a mobile phone (e.g., a smart phone or a radiotelephone), a laptop computer, a tablet computer, a desktop computer, a handheld computer, a gaming device, a wearable communication device (e.g., a smart watch, a pair of smart glasses, a heart rate monitor, a fitness tracker, smart clothing, smart jewelry, or a head mounted display), a network device, a server device, a group of server devices, or a similar type of device. In some implementations, the endpoint device 210 may receive network traffic from and/or may provide network traffic to other endpoint devices 210 and/or the server device 230, via the network 250 (e.g., by routing packets using the network devices 220 as intermediaries).

The network device 220 includes one or more devices capable of receiving, processing, storing, routing, and/or providing traffic (e.g., a packet or other information or metadata) in a manner described herein. For example, the network device 220 may include a router, such as a label switching router (LSR), a label edge router (LER), an ingress router, an egress router, a provider router (e.g., a provider edge router or a provider core router), a virtual router, a route reflector, an area border router, or another type of router. Additionally, or alternatively, the network device 220 may include a gateway, a switch, a firewall, a hub, a bridge, a reverse proxy, a server (e.g., a proxy server, a cloud server, or a data center server), a load balancer, and/or a similar device. In some implementations, the network device 220 may be a physical device implemented within a housing, such as a chassis. In some implementations, the network device 220 may be a virtual device implemented by one or more computer devices of a cloud computing environment or a data center. In some implementations, a group of network devices 220 may be a group of data center nodes that are used to route traffic flow through the network 250.

The server device 230 may include one or more devices capable of receiving, generating, storing, processing, providing, and/or routing information, as described elsewhere herein. The server device 230 may include a communication device and/or a computing device. For example, the server device 230 may include a server, such as an application server, a client server, a web server, a database server, a host server, a proxy server, a virtual server (e.g., executing on computing hardware), or a server in a cloud computing system. In some implementations, the server device 230 may include computing hardware used in a cloud computing environment.

The distributed data structure 240 may include one or more devices capable of receiving, generating, storing, processing, and/or providing information, as described elsewhere herein. The distributed data structure 240 may include a communication device and/or a computing device. For example, the distributed data structure 240 may include a database, a server, a database server, an application server, a client server, a web server, a host server, a proxy server, a virtual server (e.g., executing on computing hardware), a server in a cloud computing system, a device that includes computing hardware used in a cloud computing environment, or a similar type of device. The distributed data structure 240 may communicate with one or more other devices of the environment 200, as described elsewhere herein.

The network 250 includes one or more wired and/or wireless networks. For example, the network 250 may include a packet switched network, a cellular network (e.g., a fifth generation (5G) network, a fourth generation (4G) network, such as a long-term evolution (LTE) network, a third generation (3G) network, a code division multiple access (CDMA) network, a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

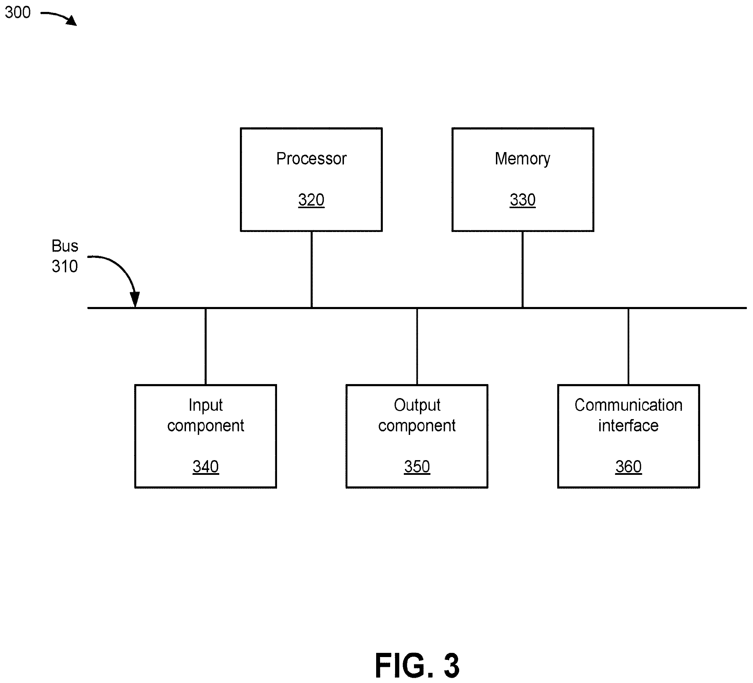

Fig. 3 is a diagram of example components of one or more devices of Fig. 2. The example components may be included in a device 300, which may correspond to the endpoint device 210, the network device 220, the server device 230, and/or the distributed data structure 240. In some implementations, the endpoint device 210, the network device 220, the server device 230, and/or the distributed data structure 240 may include one or more devices 300 and/or one or more components of the device 300. As shown in Fig. 3, the device 300 may include a bus 310, a processor 320, a memory 330, an input component 340, an output component 350, and a communication component 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit (CPU), a graphics processing unit (GPU), an accelerated processing unit (APU), a microprocessor, a controller, a microcontroller, a digital signal processor (DSP), a field-programmable gate array (FPGA), an application-specific integrated circuit (ASIC), and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication component 360 enables the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a computer-readable medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

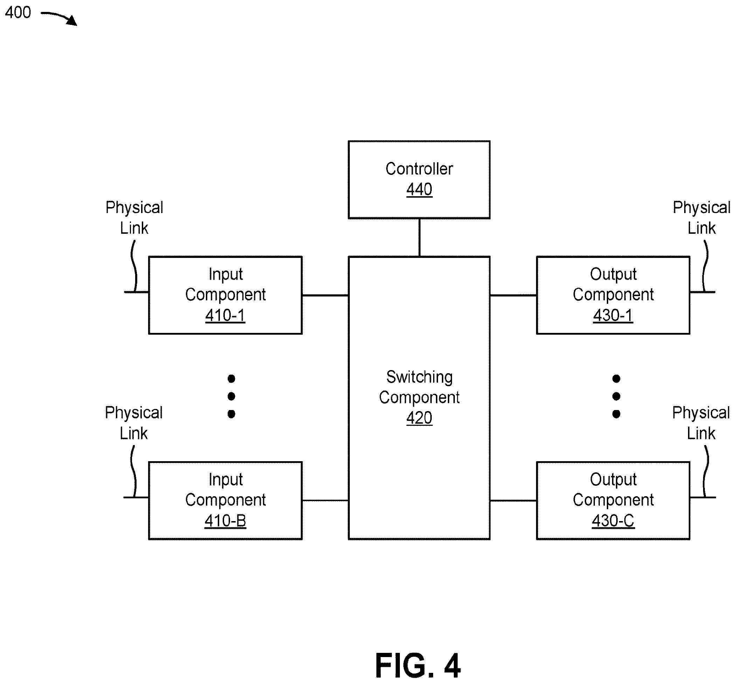

Fig. 4 is a diagram of example components of one or more devices of Fig. 2. The example components may be included in a device 400. The device 400 may correspond to the network device 220. In some implementations, the network device 220 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions encoded by a computer-readable medium. A computer-readable medium can include a non-transitory memory device. A memory device includes memory space within a single physical storage device or memory space spread across multiple physical storage devices. Additionally, or alternatively, a computer-readable medium can include transient media such as carrier waves and transmission media.

Software instructions may be read into a memory and/or storage component associated with the controller 440 from another computer-readable medium or from another device via a communication component. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

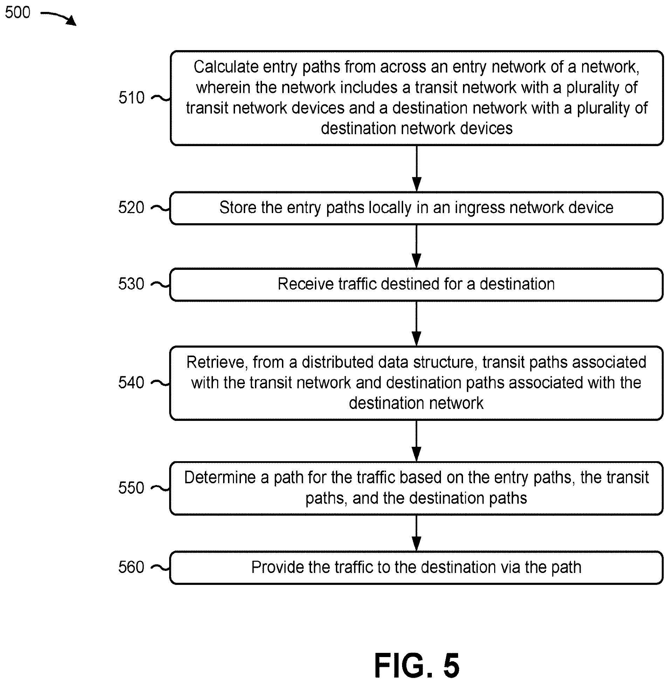

Fig. 5 is a flowchart of an example process 500 for providing hierarchical traffic engineering for a network. In some implementations, one or more process blocks of Fig. 5 may be performed by a network device (e.g., a network device 220). In some implementations, one or more process blocks of Fig. 5 may be performed by another device or a group of devices separate from or including the network device, such as another network device (e.g., a network device 220). Additionally, or alternatively, one or more process blocks of Fig. 5 may be performed by one or more components of the device 300, such as the processor 320, the memory 330, the input component 340, the output component 350, and/or the communication component 360. Additionally, or alternatively, one or more process blocks of Fig. 5 may be performed by one or more components of the device 400, such as the input component 410, the switching component 420, the output component 430, and/or the controller 440.

As shown in Fig. 5, process 500 may include calculating entry paths from across an entry network of a network, wherein the network includes a transit network with a plurality of transit network devices and a destination network with a plurality of destination network devices (block 510). For example, the ingress network device may calculate entry paths from across an entry network of a network, as described above. In some implementations, the network includes a transit network with a plurality of transit network devices and a destination network with a plurality of destination network devices. In some implementations, each of the plurality of transit network devices is an area border router. In some implementations, each of the plurality of destination network devices is a provider edge router.

As further shown in Fig. 5, process 500 may include storing the entry paths locally in the ingress network device (block 520). For example, the ingress network device may store the entry paths locally in the ingress network device, as described above.

As further shown in Fig. 5, process 500 may include receiving traffic destined for a destination (block 530). For example, the ingress network device may receive traffic destined for a destination, as described above.

As further shown in Fig. 5, process 500 may include retrieving, from a distributed data structure, transit paths associated with the transit network and destination paths associated with the destination network (block 540). For example, the ingress network device may retrieve, from a distributed data structure, transit paths associated with the transit network and destination paths associated with the destination network, as described above. In some implementations, the plurality of transit network devices are configured to calculate the transit paths associated with the transit network and to store the transit paths in the distributed data structure. In some implementations, the plurality of transit network devices are configured to calculate administrative policy properties of the transit paths and bandwidth utilization by the transit paths, and to store the administrative policy properties and the bandwidth utilization in the distributed data structure.

In some implementations, the plurality of destination network devices are configured to calculate the destination paths associated with the destination network and to store the destination paths in the distributed data structure. In some implementations, the plurality of destination network devices are configured to calculate administrative policy properties of the destination paths and bandwidth utilization by the destination paths, and to store the administrative policy properties and the bandwidth utilization in the distributed data structure.

In some implementations, the distributed data structure is configured to store the transit paths, administrative policy properties of the transit paths, and bandwidth utilization by the transit paths. In some implementations, the distributed data structure is configured to store the destination paths, administrative policy properties of the destination paths, and bandwidth utilization by the destination paths.

As further shown in Fig. 5, process 500 may include determining a path for the traffic based on the entry paths, the transit paths, and the destination paths (block 550). For example, the ingress network device may determine a path for the traffic based on the entry paths, the transit paths, and the destination paths, as described above. In some implementations, determining the path for the traffic based on the entry paths, the transit paths, and the destination paths includes selecting one of the entry paths for the path, selecting one or more of the transit paths for the path, selecting one of the destination paths for the path, and combining the one of the entry paths, the one or more of the transit paths, and the one of the destination paths to generate the path. In some implementations, the path is an end-to-end path through the network for the traffic.

As further shown in Fig. 5, process 500 may include providing the traffic to the destination via the path (block 560). For example, the ingress network device may provide the traffic to the destination via the path, as described above.

In some implementations, process 500 includes signaling the path to one or more of the plurality of transit network devices and to one or more of the plurality of destination network devices prior to providing the traffic to the destination via the path. In some implementations, the traffic is provided to the one or more of the plurality of transit network devices, then to the one or more of the plurality of destination network devices, and finally to the destination.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

Thus, from one perspective, there has now been described an ingress network device which may calculate entry paths from across an entry network of a network, wherein the network includes a transit network with a plurality of transit network devices and a destination network with a plurality of destination network devices. The ingress network device may store the entry paths locally in the ingress network device, and may receive traffic destined for a destination. The ingress network device may retrieve, from a distributed data structure, transit paths associated with the transit network and destination paths associated with the destination network, and may determine a path for the traffic based on the entry paths, the transit paths, and the destination paths. The ingress network device may provide the traffic to the destination via the path.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

Further examples of feature combinations taught by the present disclosure are set out in the following numbered clauses:
1. A method, comprising:
   calculating, by an ingress network device, entry paths from across an entry network of a network,
      wherein the network includes a transit network with a plurality of transit network devices and a destination network with a plurality of destination network devices;
   storing, by the ingress network device, the entry paths locally in the ingress network device;
   receiving, by the ingress network device, traffic destined for a destination;
   retrieving, by the ingress network device and from a distributed data structure, transit paths associated with the transit network and destination paths associated with the destination network;
   determining, by the ingress network device, a path for the traffic based on the entry paths, the transit paths, and the destination paths; and
   providing, by the ingress network device, the traffic to the destination via the path.
2. The method of clause 1, wherein the plurality of transit network devices are configured to calculate the transit paths associated with the transit network and to store the transit paths in the distributed data structure.
3. The method of clause 2, wherein the plurality of transit network devices are configured to calculate administrative policy properties of the transit paths and bandwidth utilization by the transit paths, and to store the administrative policy properties and the bandwidth utilization in the distributed data structure.
4. The method of any preceding clause, wherein the plurality of destination network devices are configured to calculate the destination paths associated with the destination network and to store the destination paths in the distributed data structure.
5. The method of clause 4, wherein the plurality of destination network devices are configured to calculate administrative policy properties of the destination paths and bandwidth utilization by the destination paths, and to store the administrative policy properties and the bandwidth utilization in the distributed data structure.
6. The method of any preceding clause, wherein the distributed data structure is configured to store the transit paths, administrative policy properties of the transit paths, and bandwidth utilization by the transit paths.
7. The method of any preceding clause, wherein the distributed data structure is configured to store the destination paths, administrative policy properties of the destination paths, and bandwidth utilization by the destination paths.
8. An ingress network device, comprising:
   one or more memories; and
   one or more processors to:
      calculate entry paths from across an entry network of a network,
         wherein the network includes a transit network with a plurality of transit network devices and a destination network with a plurality of destination network devices;
            store the entry paths locally in the ingress network device;
            receive traffic destined for a destination;
            retrieve, from a distributed data structure, transit paths associated with the transit network and destination paths associated with the destination network,
         wherein the distributed data structure is configured to store the transit paths, administrative policy properties of the transit paths, bandwidth utilization by the transit paths, the destination paths, administrative policy properties of the destination paths, and bandwidth utilization by the destination paths;
      determine a path for the traffic based on the entry paths, the transit paths, and the destination paths; and
      provide the traffic to the destination via the path.
9. The ingress network device of clause 8, wherein the one or more processors, to determine the path for the traffic based on the entry paths, the transit paths, and the destination paths, are to:
   select one of the entry paths for the path;
   select one or more of the transit paths for the path;
   select one of the destination paths for the path; and
   combine the one of the entry paths, the one or more of the transit paths, and the one of the destination paths to generate the path.
10. The ingress network device of clause 8 or clause 9, wherein the path is an end-to-end path through the network for the traffic.
11. The ingress network device of any of clauses 8 to 10, wherein the one or more processors are further to:
   signal the path to one or more of the plurality of transit network devices and to one or more of the plurality of destination network devices prior to providing the traffic to the destination via the path.
12. The ingress network device of clause 11, wherein the traffic is provided to the one or more of the plurality of transit network devices, then to the one or more of the plurality of destination network devices, and finally to the destination.
13. The ingress network device of any of clauses 8 to 12, wherein each of the plurality of transit network devices is an area border router.
14. The ingress network device of any of clauses 8 to 13, wherein each of the plurality of destination network devices is a provider edge router.
15. A computer-readable medium encoding a set of instructions, the set of instructions comprising:
   one or more instructions that, when executed by one or more processors of an ingress network device, cause the ingress network device to:
   calculate entry paths from across an entry network of a network,
   wherein the network includes a transit network with a plurality of transit network devices and a destination network with a plurality of destination network devices;
      store the entry paths locally in the ingress network device;
      receive traffic destined for a destination;
      retrieve, from a distributed data structure, transit paths associated with the transit network and destination paths associated with the destination network;
   determine a path for the traffic based on the entry paths, the transit paths, and the destination paths;
   signal the path to one or more of the plurality of transit network devices and to one or more of the plurality of destination network devices; and
   provide the traffic to the destination via the path and based on signaling the path to the one or more of the plurality of transit network devices and to the one or more of the plurality of destination network devices.
16. The computer-readable medium of clause 15, wherein the distributed data structure is configured to store the transit paths, administrative policy properties of the transit paths, and bandwidth utilization by the transit paths.
17. The computer-readable medium of clause 15 or clause 16, wherein the distributed data structure is configured to store the destination paths, administrative policy properties of the destination paths, and bandwidth utilization by the destination paths.
18. The computer-readable medium of any of clauses 15 to 17, wherein the one or more instructions, that cause the ingress network device to determine the path for the traffic based on the entry paths, the transit paths, and the destination paths, cause the ingress network device to:
   select one of the entry paths for the path;
   select one or more of the transit paths for the path;
   select one of the destination paths for the path; and
   combine the one of the entry paths, the one or more of the transit paths, and the one of the destination paths to generate the path.
19. The computer-readable medium of any of clauses 15 to 18, wherein the traffic is provided to the one or more of the plurality of transit network devices, then to the one or more of the plurality of destination network devices, and finally to the destination.
20. The computer-readable medium of any of clauses 15 to 19, wherein each of the plurality of transit network devices is an area border router, and each of the plurality of destination network devices is a provider edge router.

## Claims

**1.** A method, comprising:
calculating, by an ingress network device, entry paths from across an entry network of a network,
wherein the network includes a transit network with a plurality of transit network devices and a destination network with a plurality of destination network devices;
storing, by the ingress network device, the entry paths locally in the ingress network device;
receiving, by the ingress network device, traffic destined for a destination;
retrieving, by the ingress network device and from a distributed data structure, transit paths associated with the transit network and destination paths associated with the destination network;
determining, by the ingress network device, a path for the traffic based on the entry paths, the transit paths, and the destination paths; and
providing, by the ingress network device, the traffic to the destination via the path.

**2.** The method of claim 1, wherein the plurality of transit network devices are configured to calculate the transit paths associated with the transit network and to store the transit paths in the distributed data structure.

**3.** The method of claim 2, wherein the plurality of transit network devices are configured to calculate administrative policy properties of the transit paths and bandwidth utilization by the transit paths, and to store the administrative policy properties and the bandwidth utilization in the distributed data structure.

**4.** The method of any preceding claim, wherein the plurality of destination network devices are configured to calculate the destination paths associated with the destination network and to store the destination paths in the distributed data structure, for example wherein the plurality of destination network devices are configured to calculate administrative policy properties of the destination paths and bandwidth utilization by the destination paths, and to store the administrative policy properties and the bandwidth utilization in the distributed data structure.

**6.** The method of any preceding claim, wherein the distributed data structure is configured to store the transit paths, administrative policy properties of the transit paths, and bandwidth utilization by the transit paths.

**7.** The method of any preceding claim, wherein the distributed data structure is configured to store the destination paths, administrative policy properties of the destination paths, and bandwidth utilization by the destination paths.

**8.** An ingress network device, comprising:
one or more memories; and
one or more processors to:
calculate entry paths from across an entry network of a network,
wherein the network includes a transit network with a plurality of transit network devices and a destination network with a plurality of destination network devices;
store the entry paths locally in the ingress network device;
receive traffic destined for a destination;
retrieve, from a distributed data structure, transit paths associated with the transit network and destination paths associated with the destination network,
wherein the distributed data structure is configured to store the transit paths, administrative policy properties of the transit paths, bandwidth utilization by the transit paths, the destination paths, administrative policy properties of the destination paths, and bandwidth utilization by the destination paths;
determine a path for the traffic based on the entry paths, the transit paths, and the destination paths; and
provide the traffic to the destination via the path.

**9.** The ingress network device of claim 8, wherein the one or more processors, to determine the path for the traffic based on the entry paths, the transit paths, and the destination paths, are to:
select one of the entry paths for the path;
select one or more of the transit paths for the path;
select one of the destination paths for the path; and
combine the one of the entry paths, the one or more of the transit paths, and the one of the destination paths to generate the path.

**10.** The ingress network device of claim 8 or claim 9, wherein the path is an end-to-end path through the network for the traffic.

**11.** The ingress network device of any of claims 8 to 10, wherein the one or more processors are further to:
signal the path to one or more of the plurality of transit network devices and to one or more of the plurality of destination network devices prior to providing the traffic to the destination via the path.

**12.** The ingress network device of claim 11, wherein the traffic is provided to the one or more of the plurality of transit network devices, then to the one or more of the plurality of destination network devices, and finally to the destination.

**13.** The ingress network device of any of claims 8 to 12, wherein each of the plurality of transit network devices is an area border router.

**14.** The ingress network device of any of claims 8 to 13, wherein each of the plurality of destination network devices is a provider edge router.

**15.** A computer-readable medium encoding a set of instructions that, when executed by one or more processors of an ingress network device, cause the ingress network device to perform the method of any of claims 1 to 7.
